Europäisches Patentamt

European Patent Office

Office européen des brevets

(11) Numéro de publication: **0 391 469 B1**

(12) **FASCICULE DE BREVET EUROPEEN**

(45) Date de publication de fascicule du brevet: **29.06.94**  (51) Int. Cl.5: **H04M 1/60**

(21) Numéro de dépôt: **90200748.3**

(22) Date de dépôt: **29.03.90**

(54) **Circuit de commande d'écoute amplifiée.**

(30) Priorité: **04.04.89 FR 8904407**

(43) Date de publication de la demande:
**10.10.90 Bulletin 90/41**

(45) Mention de la délivrance du brevet:
**29.06.94 Bulletin 94/26**

(84) Etats contractants désignés:
**DE FR GB IT**

(56) Documents cités:
**EP-A- 0 189 711**
**DE-A- 3 402 285**
**FR-A- 2 601 538**

**IEEE JOURNAL OF SOLID-STATE CIRCUITS,
vol. SC-17, no. 3, juin 1982, pages 494-498,
IEEE, New York, US; K. EBERHARDT et al.:
"An integrated telephone speech circuit including a line fed loudspeaker amplifier"**

(73) Titulaire: **PHILIPS COMPOSANTS**
**4, rue du Port aux Vins**
**F-92150 Suresnes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB IT**

(72) Inventeur: **Jouen, Philippe**
**Societé Civile S.P.I.D.,**
**156, Boulevard Haussmann**
**F-75008 Paris(FR)**

(74) Mandataire: **Charpail, François et al**
**Société Civile S.P.I.D.**
**156, Boulevard Haussmann**
**F-75008 Paris (FR)**

Rank Xerox (UK) Business Services
(3.10/3.09/3.3.3)

## Description

La présente invention a pour objet un circuit de commande d'une écoute amplifiée comportant un régulateur shunt agencé pour réguler à une première valeur de référence la tension d'alimentation d'un amplificateur dont la sortie est connectée à un dispositif d'écoute, ainsi qu'un dispositif de commande produisant une tension de commande pour agir sur le gain de l'amplificateur au moins en fonction du courant traversant le régulateur shunt et comportant un dispositif de mémorisation d'une tension de contrôle de gain.

Un tel circuit est connu de la demande de brevet européen 189.711. Avec ce circuit, le gain de l'amplificateur est abaissé lorsque le courant traversant le régulateur shunt diminue de façon importante. Lorsque le courant traversant le régulateur shunt est considéré comme normal, le gain de l'amplificateur garde sa valeur nominale.

Ce circuit est plus particulièrement destiné à fonctionner dans le cas de signaux d'amplitude constante (p. ex. tonalités). Par contre, il ne convient pas pour corriger le gain en présence de signaux donc l'amplitude varie constamment (parole) car, dépourvu de toute temporisation, il agit alors comme un simple circuit d'écrêtage, ce qui produit des harmoniques, et donc de la distortion. En outre, il consomme un maximum de courant lorsque le courant disponible sur la ligne est minimal.

Le circuit tel que défini dans la notice d'application TEA 7531 de THOMSON-CSF met en oeuvre le même principe de base mais avec une modification importante consistant à mettre en oeuvre un circuit parallèle résistance-capacité, le gain de l'amplificateur étant commandé en fonction de la valeur de la tension aux bornes de ladite capacité. Ce montage présente l'inconvénient d'être intrinsèquement instable et ne peut valablement fonctionner qu'avec des constantes de temps élevées (plusieurs secondes) susceptibles de réduire l'amplitude des oscillations.

L'invention a pour objet un circuit du type mentionné, mais de conception différente de manière à éviter les instabilités et à permettre d'obtenir des constantes de temps satisfaisantes pour un contrôle automatique de gain de manière à éviter que l'on perçoive des signaux distordus sur le haut-parleur d'écoute amplifiée.

Le circuit selon l'invention est ainsi caractérisé en ce que le dispositif de commande comporte :
- un premier moyen pour faire varier selon une première loi de variation ladite tension mémorisée, dans un premier sens correspondant à une augmentation du gain lorsque le régulateur shunt est traversé par un courant et pour interrompre cette action dans le cas contraire.
- et un deuxième moyen pour faire varier, selon une deuxième loi de variation plus rapide que la première, ladite tension mémorisée dans un deuxième sens opposé au premier lorsque la tension d'alimentation disponible aux bornes d'alimentation de l'amplificateur descend en dessous d'une deuxième valeur de référence inférieure à la première valeur de référence.

Le courant traversant le régulateur shunt est ainsi uniquement utilisé pour autoriser que l'amplificateur atteigne son gain nominal. Le deuxième moyen entre en action lorsque la tension aux bornes d'alimentation de l'amplificateur est inférieure à la première valeur de référence. Dans ce cas, et par le principe même d'un régulateur shunt, aucun courant ne traverse ce dernier et le premier moyen est inactif. On évite ainsi le problème d'instabilité du dispositif de l'art antérieur et on peut choisir pour la diminution du gain de l'amplificateur une loi de variation présentant une constante de temps plus faible que dans l'art antérieur.

La deuxième valeur de référence peut être choisie voisine de la tension d'alimentation minimale correspondant à un fonctionnement correct de l'amplificateur.

Selon un mode de réalisation particulièrement avantageux, le dispositif de mémorisation comporte une branche-série comprenant une résistance en série avec un condensateur de mémorisation, et dont une première extrémité est connectée au pôle de mode commun et dont la deuxième extrémité qui délivre ladite tension mémorisée, est en contact avec une borne de contrôle de gain de l'amplificateur. L'amplificateur peut être agencé de manière que le gain soit une fonction croissante de la tension de commande. De la sorte, le condensateur ne se charge que lorsqu'un maximum de courant est disponible.

Le premier moyen peut comporter une source de courant d'intensité donnée et un premier dispositif de commutation agencé pour commander la charge dudit condensateur de mémorisation par ladite source de courant, seulement lorsque du courant traverse le régulateur shunt. On obtient ainsi que, lorsque l'alimentation du circuit est considérée comme satisfaisante, le gain de l'amplificateur atteigne de manière contrôlée sa valeur nominale.

Le deuxième moyen peut comporter un deuxième dispositif de commutation agencé pour commander la décharge temporisée dudit élément capacitif selon ladite deuxième loi.

Le premier et le deuxième dispositif de commutation peuvent présenter respectivement un premier et un deuxième circuit à seuil référencés chacun au point commun à deux résistances d'un groupe de trois résistances disposées en série aux bornes de l'alimentation du circuit.

Le deuxième dispositif de commutation peut comporter un transistor de commutation dont le trajet collecteur-émetteur est disposé entre la deuxième extrémité de ladite branche série et le pôle de mode commun.

Selon un mode de réalisation avantageux, une cinquième résistance peut être disposée en série entre ladite borne de contrôle de gain et le trajet collecteur-émetteur dudit transistor de commutation et sa valeur est alors choisie de manière à maintenir celui-ci en saturation lors de ladite décharge temporisée du condensateur de mémorisation.

Selon un mode de réalisation préféré, le premier moyen comporte un comparateur de courant pour comparer le courant traversant le régulateur shunt à un courant de référence.

L'invention sera mieux comprise à la lecture de la description qui va suivre, donnée à titre d'exemple non limitatif, en liaison avec les dessins qui représentent :

- la figure 1, un poste d'abonné selon l'art antérieur, et comportant un circuit d'écoute amplifié dont la tension d'alimentation est contrôlée par un régulateur shunt.
- la figure 2, un circuit de contrôle de gain d'un amplificateur d'écoute amplifiée selon le brevet européen 189.711 précité, et la figure 3 selon le circuit TEA 7531 de THOMSON-CSF.
- la figure 4, un circuit selon l'invention, et
- la figure 5, un mode de réalisation préféré de l'invention.

Sur toutes les figures, les mêmes signes de référence désignent les éléments identiques.

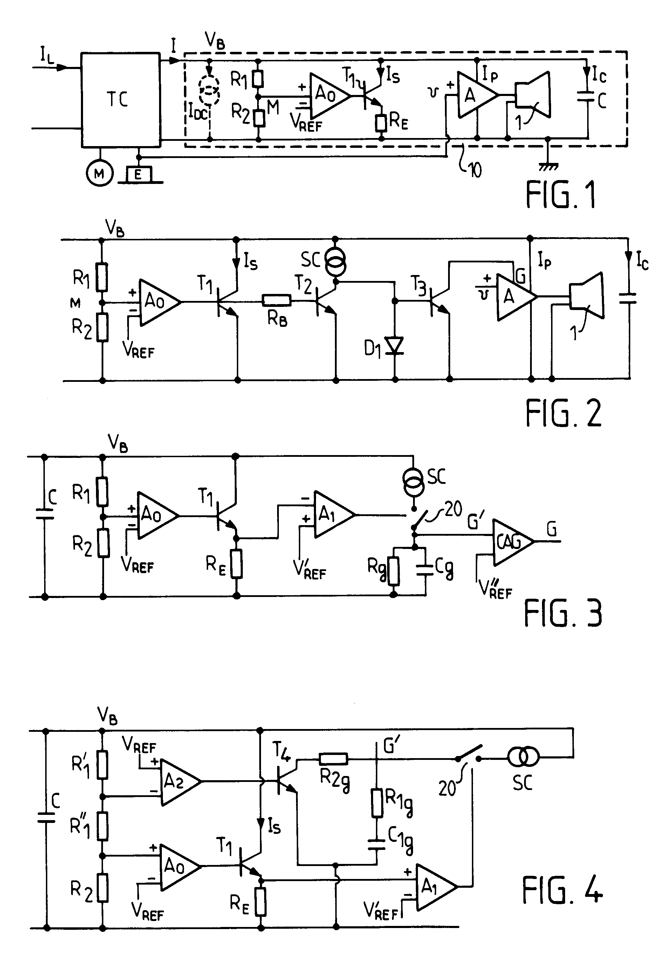

Selon la figure 1, un poste d'abonné comporte un circuit de transmission TC dont les entrées sont connectées à une ligne délivrant un courant $I_L$, ainsi qu'à un microphone M. Les sorties alimentent un écouteur E et un circuit d'écoute amplifié 10. Le circuit de transmission délivre un courant I qui alimente le circuit d'écoute amplifiée 10, lequel comporte un amplificateur A, un haut-parleur 1 et un régulateur shunt ($R_1$, $R_2$, $A_0$, $T_1$, $R_E$). Ce dernier a pour fonction d'empêcher que la tension d'alimentation $V_B$ de l'amplificateur A ne dépasse une valeur de référence $V_0$. Les deux résistances $R_1$ et $R_2$ forment une branche série disposée aux bornes d'alimentation du circuit d'écoute amplifiée. Leur point milieu M est connecté à l'entrée non inverseuse de l'amplificateur $A_0$ dont l'entrée inverseuse est portée à une tension de référence $V_{REF}$. La sortie de l'amplificateur $A_0$ est connectée à la base d'un transistor $T_1$ dont le trajet collecteur-émetteur est connecté aux bornes d'alimentation du circuit d'écoute amplifié, et qui présente une résistance d'émetteur $R_E$. Lorsque la tension au point M est supérieure à $V_{REF}$, le transistor $T_1$ est passant et dérive un courant $I_s$, ce qui tend à faire chuter $V_B$. Lorsque la tension au point M est inférieure à $V_{REF}$, le transistor $T_1$ est bloqué et le régulateur shunt est inactif. Dans la région de fonctionnement intermédiaire, le régulateur shunt dérive un courant fonction de la valeur de $V_B$.

On a alors :

$$V_0 = \frac{R_1 + R_2}{R_2} V_{REF}$$

Pour éviter que la tension $V_B$ ne chute trop rapidement en dessous de $V_0$, un condensateur C est connecté aux bornes d'alimentation. En général, le condensateur C est un composant discret associé à un circuit intégré d'écoute amplifié qui alimente le haut-parleur 1.

Selon la figure 2, un transistor $T_2$ dont la base est reliée à celle des transistors $T_1$ à travers une résistance $R_B$ a son trajet collecteur-base disposé en série avec une source de courant SC, formant ainsi une branche série connectée aux bornes d'alimentation. Le point commun à la source de courant et au collecteur du transistor $T_2$ est connecté à la base d'un transistor $T_3$ dont le collecteur est connecté à l'entrée G de contrôle de gain de l'amplificateur A et dont l'émetteur est connecté au pôle de mode commun. Une diode $D_1$ est en outre branchée dans le sens direct entre la base et l'émetteur du transistor $T_3$, pour former un miroir de courant.

Lorsque $V_B$ est supérieur à $V_0$, le transistor $T_2$ est passant et une franction du courant de la source de courant SC traverse la diode $D_1$ et est recopié par le courant collecteur du transistor $T_3$. Ce dernier courant s'annule dès que la valeur instantanée du courant $I_s$ atteint un seuil fixé par $R_B$, la valeur du courant de la source de courant SC et le rapport des dimensions des émetteurs des transistors $T_1$ et $T_2$.

Lorsque $V_B$ est inférieur à $V_0$, le transistor $T_2$ est bloqué et le courant de la source de courant SC traverse la diode $D_1$, ce qui fait que le courant de collecteur du transistor $T_3$ est maximal. Ceci est un inconvénient car le courant consommé par le circuit de réduction de gain est maximal justement lorsque le courant disponible sur la ligne est le plus faible. Dans la région de fonctionnement intermédiaire, le transistor $T_3$ est traversé par un courant qui est la différence entre le courant délivré par la source de courant SC et le courant de collecteur du transistor $T_2$.

Ce courant ne convient pas pour corriger le gain en présence de signaux tels que la parole, car, dépourvu de temporisation, il fonctionne en écrêteur, et l'auditeur entend des signaux distordus.

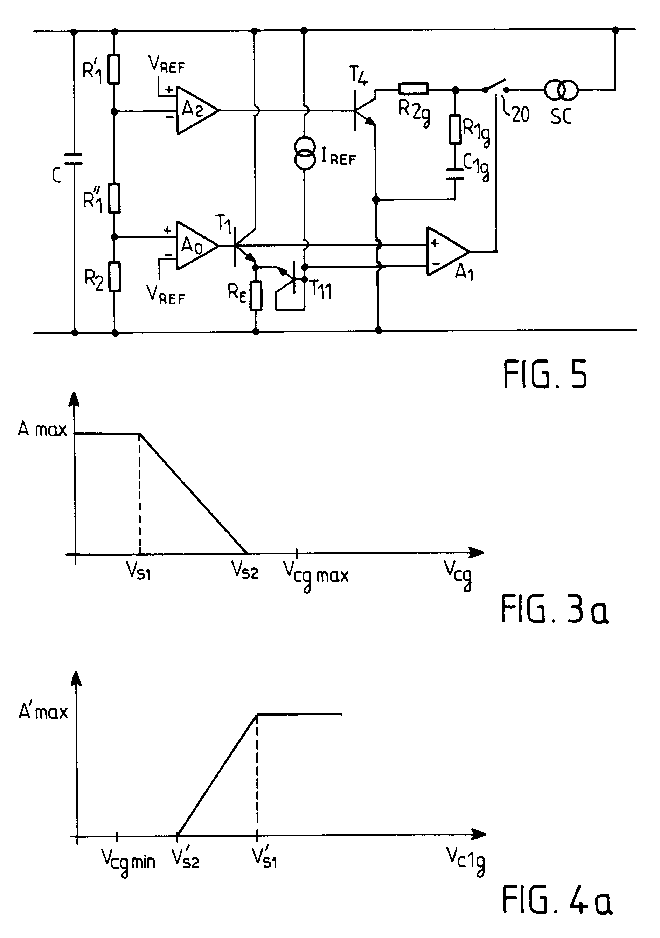

Selon la figure 3, le circuit présente une branche parallèle Rg, Cg destinée à mémoriser une tension de contrôle automatique de gain. Un amplificateur $A_1$ a son entrée inverseuse connectée à l'émetteur du transistor $T_1$ pourvu de la résistance d'émetteur $R_E$ et son entrée non inverseuse est portée à une tension de référence $V'_{REF}$. Sa sortie commande par tout ou rien la commutation d'un interrupteur 20 (par exemple un transistor monté en région de commutation). Cet interrupteur 20 est disposé en série entre la source de courant SC et la branche parallèle Rg, Cg. La borne de cette branche parallèle, connectée à l'interrupteur 20, est connectée également à l'entrée d'un amplificateur CAG dont l'autre entrée est porté au potentiel de référence $V''_{REF}$ et dont la sortie est connectée à l'entrée G de contrôle automatique de gain de l'amplificateur A.

Lorsque $V_B < V_0$, le transistor $T_1$ est bloqué, la sortie de l'amplificateur $A_1$ est au niveau haut et l'interrupteur 20 est fermé, donc la source de courant SC d'intensité $I_{sc}$ charge le condensateur Cg à une tension $V_{cg}$. ($VCg_{max} = Rg \times I_{sc}$)

Lorsque $V_B > V_0$, le transistor $T_1$ conduit et la sortie de l'amplificateur $A_1$ est au niveau 0 ce qui fait que l'interrupteur 20 est ouvert. La fermeture de l'interrupteur 20 intervient lorsque le courant collecteur $I_s$ du transistor $T_1$ atteint un niveau tel que :

$R_E I_s = V'_{REF}$ car $I_s \sim$ courant émetteur de $T_1$.

Le contrôle automatique de gain est activé lorsque la tension aux bornes de Cg est supérieure à $V'_{REF}$.

Lorsque $V_B$ devient inférieur à $V_0$, l'interrupteur 20 est fermé et le condensateur Cg se charge (constante de temps déterminée par Cg, Rg et SC). Le gain baisse donc avec un certain retard correspondant à la charge du condensateur C qui se poursuit. Cg continue à se charger tant que $V_B$ n'a pas de nouveau atteint $V_0$. En pratique, la baisse du gain est surcompensée. La remontée du gain se produit par décharge du condensateur Cg à travers la résistance Rg. La remontée du gain tend à faire retomber $V_B$ en dessous de $V_0$. Il en résulte en pratique une modulation d'amplitude triangulaire du signal. Pour diminuer cet inconvénient, un condensateur Cg de forte valeur (quelques $10\mu F$), donc non intégrable, est chargé par un courant faible (SC a alors un courant de quelques $\mu A$). L'amplitude de la modulation triangulaire n'est alors plus gênante, mais subsiste la contrainte d'un condensateur Cg de valeur élevée, et le fait que le condensateur Cg doit être chargé au moment où le courant disponible est le plus faible. La courbe de gain en fonction de la tension VCg est donnée à la figure 3a. Cette courbe est d'allure décroissante.

En outre, la constante de temps ainsi induite (Rg Cg) est de l'ordre de 1 sec. ce qui est sans effet sur les distorsions produites par des pointes d'amplitude de la voix, pour lesquelles il faut un système qui réponde rapidement.

Selon la figure 4, un circuit selon l'invention comporte trois résistances en série $R'_1$, $R''_1$ et $R_2$ connectés entre les bornes d'alimentation de l'amplificateur A (non représenté). L'amplificateur $A_0$ a son entrée non inverseuse connectée au point commun aux résistances $R''_1$ et $R_2$. Le circuit présente également le transistor $T_1$, la résistance $R_E$, de l'amplificateur $A_1$, la source de courant SC et l'interrupteur 20, agencés comme sur la figure 3, mais l'émetteur du transistor $T_1$ est connecté à l'entrée non inverseuse de l'amplificateur $A_1$. En outre, la mémorisation et l'utilisation de la tension de contrôle de gain sont réalisées de manière très différente. Une branche série constituée par une résistance $R_{1g}$ et un condensateur de mémorisation $C_{1g}$ est connectée entre le pôle de mode commun et l'entrée de contrôle de gain G de l'amplificateur A. L'interrupteur 20, par exemple un transistor fonctionnant en régime de commutation, a pour fonction de mettre la source de courant SC en contact avec la branche série (point G) lorsque le régulateur shunt dérive du courant (transistor $T_1$ non bloqué), ce qui permet, comme d'ailleurs dans le cas de la figure 3, de charger de manière temporisée le condensateur $C_{1g}$ pour atteindre le gain maximal. Pour décharger le condensateur $C_{1g}$ (et produire une diminution du gain de l'amplificateur A en abaissant la tension au point G', on met en oeuvre un dispositif à seuil qui discrimine un deuxième seuil de tension inférieur au seuil du régulateur shunt. Un amplificateur $A_2$ a son entrée non inverseuse portée au potentiel $V_{REF}$ et son entrée inverseuse connectée au point commun aux résistances $R'_1$ et $R''_1$.

La sortie de l'amplificateur $A_2$ est connectée à la base d'un transistor $T_4$ dont le trajet collecteur-émetteur est disposé entre le point G' et le pôle de mode commun. Une résistance $R_{2g}$ peut être disposée entre le col lecteur du transistor $T_2$ et le point G' et sa valeur est choisie de manière à assurer que le transistor $T_2$ soit dans son état de saturation lorsqu'il est commandé à l'ouverture.

La première valeur de seuil $V_0$, qui commande le fonctionnement du régulateur shunt vaut :

$$V_0 = \frac{R'_1 + R''_1 + R_2}{R_2} V_{REF}$$

La deuxième valeur de seuil $V_1$ qui commande la décharge du condensateur de mémorisation $C_{1g}$ vaut :

$$V_1 = \frac{R'_1 + R''_1 + R_2}{R''_1 + R_2} V_{REF} < V_0$$

On obtient alors le fonctionnement suivant. Lorsque $V_B > V_0$, le transistor $T_1$ dérive un courant de shunt $I_s$. Pour $R_E I_s > V'_{REF}$, la sortie de l'amplificateur $A_1$ est au niveau maximal, ce qui commande la fermeture de l'interrupteur 20. La source de courant SC charge le condensateur $C_{1g}$. Lorsque le condensateur $C_{1g}$ est complètement chargé, le gain de l'amplificateur A est maximal. Lorsque $V_B$ est compris entre $V_1$ et $V_0$, le régulateur shunt ne dérive plus de courant, et l'interrupteur 20 est ouvert. Le condensateur $C_{1g}$ conserve sa valeur mémorisée. Le condensateur C est susceptible de compenser pendant un court- instant. Si la valeur de $V_B$ continue de baisser et franchit le deuxième seuil $V_1$, alors le transistor $T_4$ passe à l'état ouvert, et le condensateur $C_{1g}$ se décharge à travers la résistance $R_{1g}$ (et éventuellement $R_{2g}$). La chute de tension à travers $R_{1g}$ modifie la tension au point G' et modifie instantanément le gain. La constante de temps de décharge est très courte, ce qui permet d'abaisser le gain de manière quasi-instantanée. Le transistor $T_4$ doit donc être prévu pour passer un tel courant. La consommation du haut-parleur est ainsi diminuée de telle sorte que $V_B$ cesse de décroître et sans avoir à décharger trop fortement Cg. La valeur de $R_{1g}$ (et éventuellement de $R_{2g}$) est ajustée de préférence pour que la tension aux bornes de $C_{1g}$ rejoigne la nouvelle valeur à mémoriser avec un seul dépassement de faible amplitude, et de ce fait relativement bref (environ 10 ms en pratique). Par contre, la recharge du condensateur $C_{1g}$, déchargé en tout ou partie, ne peut reprendre que lorsque $V_B$ a de nouveau atteint le seuil $V_0$ et que le régulateur shunt dérive un courant $I_s$ significatif. Le condensateur $C_{1g}$ se recharge alors progressivement grâce à la source de courant SC et le gain recommence à augmenter. Cette recharge s'effectue plus lentement que la décharge et est susceptible de s'interrompre dès que le courant shunté $I_s$ est trop faible. La stabilité du système est donc très bonne. En outre, le condensateur $C_{1g}$ ne peut se charger que lorsqu'un maximum de courant est disponible. La courbe du gain en fonction de $V_{cg}$ est donnée à la figure 4a. Cette courbe est d'allure croissante.

Comme la décharge de $C_{1g}$ est rapide, on peut choisir pour $V_1$ une valeur proche de la valeur d'alimentation minimale pour laquelle le fonctionnement de l'amplificateur A est correct (faible distortion). Ceci a également pour avantage que les chutes brutales de gain se situent alors sur des crêtes très importantes de la parole et ne sont pas audibles. En effet, une chute brutale de gain produit une forte distorsion, mais l'oreille ne remarque ce type de distorsion que lorsque leur fréquence de répétition est rapide.

Il n'est pas nécessaire d'utiliser un condensateur de valeur élevée.

On peut choisir pour $C_{1g}$ une valeur de 0,5μF, et une source de courant de 1μA. La présence éventuelle de la résistance $R_{2g}$ permet de limiter si besoin est le courant de décharge à travers le transistor $T_4$ et d'éviter le cas échéant une décharge trop brutale du condensateur $C_{1g}$ qui entraînerait un passage au gain minimum chaque fois que se produit une perturbation.

A titre d'exemple, on peut avoir $R_{1g} = 3,6k\Omega$ et $R_{2g} = 0\Omega$. En pratique, l'écart entre $V_0$ et $V_1$ peut être de l'ordre de quelques centaines de mV pour une tension $V_0$ de l'ordre de 3,5V.

La figure 5 correspond à un mode de réalisation préféré selon lequel on s'affranchit des variations dûes au procédé. Au lieu de comparer $R_E I_s$ et $V'_{REF}$, on compare $I_s$ à un courant de référence $I_{REF}$ (à un coefficient multiplicateur près). Pour ce faire, une source de courant de référence $I_{REF}$ est connectée entre la source de tension d'alimentation et l'entrée inverseuse de l'amplificateur $A_1$, et un transistor $T_{11}$ monté en diode (transistor npn dont le collecteur et la base sont court-circuités) est monté entre l'entrée inverseuse de l'amplificateur $A_1$ et l'émetteur du transistor $T_1$ de même type. L'entrée non inverseuse de l'amplificateur $A_1$ est connectée à la base du transistor $T_1$.

L'amplificateur $A_1$ agit alors en comparateur et mesure

$$I_s < r \, I_{REF}$$

r étant le rapport entre les surfaces d'émetteur des transistors $T_1$ et $T_{11}$.

Un avantage supplémentaire est que $R_E$ n'intervenant pas dans la mesure, sa valeur peut être choisie pour optimiser la stabilité de la boucle régulant la tension $V_B$. En outre, il est relativement facile d'obtenir que r et $I_{REF}$ varient peu l'un par rapport à l'autre avec le procédé alors qu'il est plus difficile de déterminer $V'_{REF}$ et $R_E$ en corrélation l'un par rapport à l'autre.

## Revendications

1. Circuit de commande d'écoute amplifiée comportant un régulateur shunt ($R'_1$, $R''_1$, $R_2$, $A_0$, $T_1$, $R_E$) agencé pour réguler à une première valeur de référence la tension d'alimentation ($V_B$) d'un amplificateur dont la sortie est connectée à un dispositif d'écoute, ainsi qu'un dispositif de commande produisant une tension de commande pour agir sur le gain de l'amplificateur au moins en fonction du courant ($I_S$) traversant le régulateur shunt et comportant un dispositif de mémorisation ($C_{1g}$) d'une tension de contrôle de gain caractérisé en ce que le dispositif de commande comporte :

- un premier moyen ($A_1$,20) pour faire varier selon une première loi de variation ladite tension mémorisée (G'), dans un premier sens correspondant à une augmentation du gain lorsque le régulateur shunt est traversé par un courant et pour interrompre cette action dans le cas contraire.

- et un deuxième moyen ($A_2$,$T_4$) pour faire varier selon une deuxième loi de variation plus rapide que la première ladite tension mémorisée (G') dans un deuxième sens opposé au premier lorsque la tension d'alimentation disponible aux bornes d'alimentation de l'amplificateur descend en dessous d'une deuxième valeur de référence inférieure à la première valeur de référence.

2. Circuit selon la revendication 1, caractérisé en ce que la deuxième valeur de référence est voisine de la tension d'alimentation minimale correspondant à un fonctionnement correct de l'amplificateur.

3. Circuit selon une des revendications 1 ou 2 caractérisé en ce que le dispositif de mémorisation comporte une branche série comprenant une résistance en série ($R_{1g}$) avec un condensateur de mémorisation ($C_{1g}$), et dont une première extrémité est connectée au pôle de mode commun et dont l'autre extrémité, qui délivre ladite tension mémorisée, est en contact avec une borne de contrôle de gain de l'amplificateur.

4. Circuit selon la revendication 3 caractérisé en ce que la borne de contrôle de gain de l'amplificateur est telle que le gain est une fonction croissante de la tension de commande.

5. Circuit selon la revendication 4, caractérisé en ce que le premier moyen comporte une source de courant (SC) d'intensité donnée et un premier dispositif de commutation (20) agencé pour commander la charge dudit condensateur de mémorisation par ladite source de courant, seulement lorsque du courant traverse le régulateur shunt.

6. Circuit selon une des revendications 3 à 5, caractérisé en ce que le deuxième moyen comporte un deuxième dispositif de commutation ($T_4$) agencé pour commander la décharge temporisée dudit condensateur de mémorisation selon ladite deuxième loi.

7. Circuit selon les revendications 5 et 6 prises ensembles, caractérisé en ce que le premier et le deuxième dispositif de commutation présentent respectivement un premier ($A_0$) et un deuxième ($A_2$) circuit à seuil référencés chacun au point commun à deux résistances d'un groupe de trois résistances ($R'_1$, $R''_1$, $R_2$) disposées en série aux bornes d'alimentation du circuit.

8. Circuit selon une des revendications 5 à 7, caractérisé en ce que le deuxième dispositif de commutation comporte un transistor de commutation ($T_4$) susceptible de produire ou non ladite décharge temporisée et dont le trajet collecteur-émetteur est disposé entre la deuxième extrémité de ladite branche série et le pôle de mode commun.

9. Circuit selon la revendication 8, caractérisé en ce qu'il comporte une cinquième résistance ($R_{2g}$) disposée en série entre ladite borne de contrôle de gain et ledit transistor de commutation et dont la valeur est choisie de manière à maintenir celui-ci en saturation lors de ladite décharge temporisée du condensateur de mémorisation.

10. Circuit selon une des revendication précédentes caractérisé en ce que le premier moyen comporte un comparateur de courant ($T_{11}$, $T_1$, $R_E$) pour comparer le courant traversant le régulateur shunt à un courant de référence ($I_{REF}$).

## Claims

1. Control circuit for amplified listening comprising a shunt regulator ($R'_1$, $R''_1$, $R_2$, $A_0$, $T_1$, $R_E$) arranged for regulating, at a first reference value, the supply voltage ($V_B$) of an amplifier having an output connected to a listening device, and a control device for producing a control voltage for influencing the gain of the amplifier at least as a function of the current ($I_s$)passing through the shunt regulator and including a storage device ($C_{1g}$) for storing a gain control voltage, characterised in that the control device comprises:

- a first means ($A_{1,20}$) for varying said stored voltage ($C'_1$) in accordance with a first variation law, in a first direction which corresponds with a gain increase when a current passes through the shunt regulator and for interrupting this action in the reverse case;

- and a second means ($A_1$,$T_4$) for varying, in accordance with a second variation law faster than the first variation law, said stored voltage ($C_{11}$) in a second direction opposite to the first direction when the supply voltage available at the supply terminals of the amplifier falls below a second reference value beneath the first reference value.

2. Circuit as claimed in Claim 1, characterised in that the second reference value lies in the neighbourhood of the minimum supply voltage corresponding with a correct operation of the amplifier.

3. Circuit as claimed in one of the Claims 1 or 2, characterised in that the storage device comprises a serial branch that includes a resistor ($R_{1g}$) connected in series to a storage capacitor ($C_{1g}$), and of which a first end is connected to the common mode pole and of which the second end, delivering said stored voltage, is connected to a gain control terminal of the amplifier.

4. Circuit as claimed in Claim 3, characterised in that the gain control terminal of the amplifier is arranged such that the gain is an ascending function of the control voltage.

5. Circuit as claimed in Claim 4, characterised in that the first means comprises a current source (SC) of a given strength and including a first switching device (20) for controlling the charging of said storage capacitor by said current source, only when current passes through the shunt regulator.

6. Circuit as claimed in Claims 3 to 5, characterised in that the second means comprises a second switching device ($T_4$) for controlling the delayed discharging of said storage capacitor according to said second variation law.

7. Circuit as claimed in the Claims 5 and 6 taken as a whole, characterised in that the first and second switching devices have a first ($A_0$) and a second ($A_2$) threshold circuit respectively, connected each to the common points of two resistors out of a group of three resistors ($R'_1$, $R'_1$, $R_2$) connected in series to the supply terminals of the circuit.

8. Circuit as claimed in one of the Claims 5 to 7, characterised in that the second switching device comprises a switch transistor ($T_4$) capable of performing or not said delayed discharging and of which the collector-emitter path is disposed between the second end of said serial branch and the common-mode pole.

9. Circuit as claimed in Claim 8, characterised in that said control circuit comprises a fifth resistor ($R_{2g}$) connected in series between said gain control terminal and said switching transistor and having a value chosen so as to maintain said switching transistor at a saturated level during the delayed discharging of the storage capacitor.

10. Circuit as claimed in one of the preceding Claims, characterised in that said first means comprises a current comparator ($T_{11}$, $T_1$, $R_E$) for comparing the current passing through the shunt regulator to a reference current ($I_{REF}$).

**Patentansprüche**

1. Steuerschaltung für verstärktes Abhören mit einem Nebenschlußregler ($R'_1$, $R''_1$, $R_2$, $A_0$, $T_1$, $R_E$) zum Regeln der Speisespannung ($V_B$) eines Verstärkers zu einem ersten Bezugswert, wobei der Ausgang dieses Verstärkers mit einer Abhörvorrichtung verbunden ist, sowie mit einer Steueranordnung, die eine Steuerspannung erzeugt zum Beeinflussen der Verstärkung des Verstärkers wenigstens in Funktion des durch den Nebenschlußregler fließenden Stromes($I_S$) und die eine Speicheranordnung ($C_{1g}$) für eine Verstärkungsregelspannung aufweist, dadurch gekennzeichnet, daß die Steueranordnung die nachfolgenden Elemente aufweist:
   - ein erstes Mittel ($A_1$, 20) zum Ändern der genannten gespeicherten Spannung (G') nach einem ersten Änderungsgesetz in einer ersten Richtung entsprechend einer Erhöhung der Verstarkung, wenn der Nebenschlußregler von einem Strom durchflossen wird und zum Unterbrechen dieses Vorgangs im entgegengesetzten Fall,
   - und ein zweites Mittel ($A_2$, $T_4$) zum nach einem zweiten Änderungsgesetz schneller als nach dem ersten Gesetz die genannte gespeicherte Spannung (G') in einem dem genannten ersten Sinn entgegengesetzten zweiten Sinn zu ändern, wenn die an den Speiseklemmen des Verstärkers vorhandene Speisespannung einen zweiten Bezugswert unterschreitet, der niedriger ist als der erste Bezugswert.

2. Schaltungsanordnung nach Anspruch 1, dadurch gekennzeichnet, daß der zweite Bezugswert in der Nähe der minimalen Speisespannung zum einwandfreien Funktionieren des Verstärkers liegt.

3. Schaltungsanordnung nach Anspruch 1 oder 2, <u>dadurch gekennzeichnet</u>, daß die Speicheranordnung einen Reihenzweig aufweist mit einem Widerstand ($R_{1g}$) in Reihe mit einem Speicherkondensator ($C_{1g}$), und von dem ein erstes Ende mit dem Gleichtaktpol verbunden ist und von dem das andere Ende, das die genannte gespeicherte Spannung liefert, mit einer Verstärkungsregelklemme des Verstärkers verbunden ist.

4. Schaltungsanordnung nach Anspruch 3, <u>dadurch gekennzeichnet</u>, daß die Verstärkungsregelklemme des Verstärkers derart vorgesehen ist, daß die Verstärkung eine ansteigende Funktion der Steuerspannung ist.

5. Schaltungsanordnung nach Anspruch 4, <u>dadurch gekennzeichnet</u>, daß das erste Mittel eine Stromquelle (SC) einer bestimmten Stärke und eine erste Schaltvorrichtung (20) aufweist zum Steuern der Aufladung des genannten Speicherkondensators durch die genannte Stromquelle, nur dann, wenn Strom durch den Nebenschlußregler fließt.

6. Schaltungsanordnung nach einem der Ansprüche 3 bis 5, <u>dadurch gekennzeichnet</u>, daß das zweite Mittel eine zweite Schaltvorrichtung ($T_4$) aufweist zum Steuern der verzögerten Entladung des Speicherkondensators gemäß dem genannten zweiten Gesetz.

7. Schaltungsanordnung nach Anspruch 5 und 6 zusammen, <u>dadurch gekennzeichnet</u>, daß die erste und zweite Schaltvorrichtung eine erste ($A_0$) bzw. zweite ($A_2$) Schwellenschaltung bilden, die je mit dem gemeinsamen Punkt zweier Widerstände einer Gruppe von drei mit den Speiseklemmen der Schaltung in Reihe vorgesehenen Widerständen ($R'_1$, $R''_1$, $R_2$) verbunden sind.

8. Schaltungsanordnung nach einem der Ansprüche 5 bis 7, <u>dadurch gekennzeichnet</u>, daß die zweite Schaltvorrichtung einen Schalttransistor ($T_4$) aufweist, der ggf. die genannte verzögerte Entladung auslösen kann und dessen Emitter-Kollektor-Strecke zwischen dem zweiten Ende des genannten Reihenzweiges und dem Gleichtaktpol vorgesehen ist.

9. Schaltungsanordnung nach Anspruch 8, <u>dadurch gekennzeichnet</u>, daß diese einen fünften Widerstand ($R_{2g}$) aufweist, der zwischen der genannten Verstärkungsregelklemme und dem genannten Steuertransistor in Reihe liegt und dessen Widerstandswert derart gewählt worden ist, daß der Transistor während der verzögerten Entladung des Speicherkondensators im gesättigten Zustand bleibt.

10. Schaltungsanordnung nach einem der vorstehenden Ansprüche, <u>dadurch gekennzeichnet</u>, daß das erste Mittel eine Stromvergleichsstufe ($T_{11}$, $T_1$, $R_E$) aufweist zum Vergleichen des Stromes durch den Nebenschlußregler mit einem Bezugsstrom ($I_{REF}$).

FIG. 1

FIG. 2

FIG. 3

FIG. 4

9

FIG. 5

FIG. 3a

FIG. 4a